# EUROPEAN PATENT SPECIFICATION

(11) **EP 2 743 040 B1**
(45) Date of publication and mention of the grant of the patent: **01.09.2021**
(21) Application number: 13466012.5
(22) Date of filing: 08.07.2013
(51) Int. Cl.: B25J 9/16, B25J 9/00

(54) **A method of determination of a position of a center of a machining tool gripped in a cooperative gripping head and a corresponding arrangement**
Verfahren zur Bestimmung der Position des Zentrums eines an einem zusammenwirkenden Einspannkopf eingespannten Bearbeitungswerkzeugs und entsprechende Anordnung
Procédé de détermination de la position du centre d'un outil d'usinage saisi dans une tête de préhension coopérative et dispositif correspondant

(30) Priority: 11.07.2012 CZ 20120474
(43) Date of publication of application: 18.06.2014
(73) Proprietor: CVUT V Praze, Fakulta Strojní, 166 07 Praha 6 (CZ); LAMMB systems s.r.o., 70300 Ostrava - Vitkovice (CZ)
(72) Inventor: Valasek, Michael, 14300 Praha 4 (CZ); Necas, Martin, 14700 Praha 4 (CZ); Binar, Lumir, 74283 Ostrava-Klimkovice (CZ)
(74) Representative: Novotny, Karel

(56) References cited:
- DE-A1- 4 314 597
- US-A- 5 049 797
- US-A1- 2004 073 335
- US-A1- 2006 048 364
- US-A1- 2009 037 022
- US-A1- 2010 154 566
- US-A1- 2010 185 324

## Description

A method of determination of a position of a center of a machining tool gripped in a cooperative gripping head and the cooperative gripping head.

### Technical Field

The invention concerns a method of determination of a position of a center of a machining tool gripped in a cooperative gripping head connected removably to at least one power industrial robot with the help of an end effector and connecting devices and the cooperative gripping head.

### Technical Field

Today's industrial robots and manipulators are of limited rigidity, so their accuracy of movement in a specified trajectory is limited as well. That is why they cannot be used as a replacement for machining tools for machining. Industrial robots and manipulators are used for machining today, however only for not precision items or for easily machinable materials. It concerns machining sandstone, plastic or aluminum. High-speed machining is often used to decrease machining forces. Despite this rigidity of the robots and achievable accuracy are not sufficient for replacing common machining tools.

Some of the industrial robots are adjusted to increase rigidity so that they can be used for machining. Parallel kinematic structures, such as parallelograms or doubling the frame with drives, are used. But still the rigidity and accuracy of common machining tools are not achieved. To measure the center of the tool, the deformation measurements in the joints and arms of each serial robot are used, as seen in DE 4314597 and US 5049797, or the measurements in the joints of an additional measuring robot as seen in US 2004073335. rigidity and accuracy of machine tools.

The aim of this invention is a solution of the abovementioned problems, increase of rigidity and accuracy of machining tools using industrial robots.

### Subject Matter of the Invention

The invention is defined by a method according to claim 1.

The subject matter of the method of determination of a position of a machining tool center gripped in a cooperative gripping head connected removably to at least two power industrial robots with respective end effectors and connecting devices according the invention consists in that the position of the center of the machining tool is determined from the measurements of positions of the kinematic pairs formed by rotational joints or sliding guides on at least one power industrial robot connected to the cooperating gripping head and from the measurement of deformation in the drives and from the measurements or without the measurements of the deformation of the arms of the power industrial robots and if a deviation of the position of the center of the machining tool from the position required is found out, drives of the power industrial robots are controlled with feedback to achieve zero deviations of the position of the center of the machining tool of the cooperative gripping head.

At least one measuring industrial robot is connected to the cooperative gripping head and is controlled by impacting upon the cooperative gripping head with zero forces. From the positions in its kinematic pairs the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

Alternatively, at least one measuring industrial robot including no drives is connected to the cooperative gripping head and is driven by the cooperative gripping head through a connecting device with no force impacting upon the cooperative gripping head. From the positions in its kinematic pairs the position of the center of the machining tool of the cooperative gripping head is determined and, further, according to the deviation of the position of the center from the position required the drives of the power industrial robots are controlled with feedback to reach zero deviations of the position of the center of the machining tool of the cooperative gripping head or
in kinematic pairs of at least one of the power industrial robots a position in the kinematic pairs and deformation in the drives of the kinematic pairs are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head or
in kinematic pairs of at least one of the power industrial robots a position in the kinematic pairs, deformation in the drives of the kinematic pairs and deformation of the arms are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head or
in kinematic pairs of at least one of the power industrial robots an overall position in the kinematic pairs including deformation in the drives of the kinematic pairs are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head or
in kinematic pairs of at least one of the power industrial robots an overall position in the kinematic pairs including deformation in the drives of the kinematic pairs and deformation of the arms are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

On at least one of the power industrial robots an overall position of the arms of the power industrial robot including positions and deformations in the drives of the kinematic pairs and deformations of the arms are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

The invention is further defined by an arrangement for determining the position of the center of the machining tool mounted in the cooperating gripping head according to the method of claim 1, as defined by claim 9.

The subject matter of the cooperative gripping head connected to at least two power industrial robot and is connected removably to the end effector of the industrial robot with the aid of connecting devices according to the invention lies in the fact that the power industrial robot, connected to the cooperative gripping head, is equipped with sensors for determining the position of the center of the machining tool.

The cooperative gripping head can be possibly in connection with another power industrial robot or with a measuring industrial robot.
The measuring industrial robot is equipped with drives in the rotational joints or in the sliding guides.

The connecting device of the cooperative gripping head is equipped with force sensors and/or with sensors of deviation of a position and orientation to ensure zero force impact.

The power industrial robot is equipped with sensors of positions in the rotational joints or in the sliding guides and with sensors of deformations in the drives of the kinematic pairs and possibly with sensors of deformations of the arms.

The power industrial robot and/or the measuring industrial robot has a parallel kinematic structure

The advantage of the method and the cooperative gripping head according to the invention is significant increase of rigidity of the entire equipment and increase of accuracy while machining by these devices compared to solutions known so far.

### Review of the Figures in the Drawings

In the enclosed figures there are schematic depictions of cooperative gripping heads connected to at least one power industrial robot and carrying a machining tool and removably connected to an end effector of the industrial robot with the help of a connecting devices according to the invention, where:
- Fig. 1: embodiment with one power industrial and one measuring industrial robot,
- Fig. 2: alternative embodiment with one power industrial and one measuring industrial robot,
- Fig. 3: another alternative embodiment with a parallel kinematic structure of the power and the measuring industrial robot,
- Fig. 4: another alternative embodiment with a serial kinematic structure of the power and the measuring industrial robot,
- Fig. 5: another alternative embodiment with a parallel kinematic structure of the power and the measuring industrial robot,
- Fig. 6: another alternative embodiment with one power industrial robot with a serial kinematic structure,
- Fig. 7: another alternative embodiment with one power industrial robot with a parallel kinematic structure,
- Fig. 8: another alternative embodiment with two power industrial robots with serial kinematic structures,
- Fig. 9: another alternative embodiment with two power industrial robots with parallel kinematic structures,
- Fig. 10: schematic depiction of measurement of movements in the drive of a rotational joint
- Fig. 11: schematic depiction of measurement of movements in a joint with a sliding guide
- Fig. 12: example of embodiment of the cooperative gripping head
- Fig. 13: example of embodiment of the cooperative gripping head, axionometric view

### Examples of Embodiment of the Invention

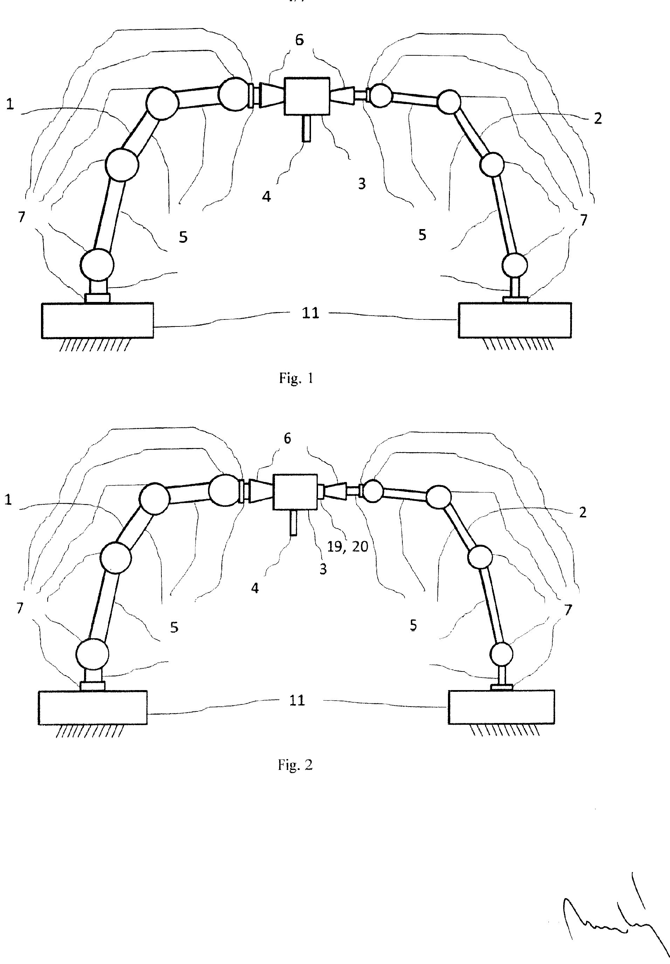

In Fig. 1 there is a schematic depiction of the basic embodiment of the cooperative gripping head 3 that is carried by the industrial robot 1. The position of the machining tool center is determined by the connected measuring industrial robot 2. The power industrial robot 1 is equipped with rotational joints with the drive 7 connecting the arms 5 and is connected to the cooperative gripping head 3 by means of the end effector 6. The measuring industrial robot 2 is equipped with rotational joints with the drive 7 connecting the arms 5 and is connected to the cooperative gripping head 3 by means of the end effector 6. The cooperative gripping head 3 carries a spindle with the machining tool 4. The power industrial robot 1 and also the measuring industrial robot 2 have serial kinematic structures. An example of control of the measuring robot 2 for achieving its zero power impact on the cooperative gripping head is control of its drives according to the inversion dynamics for the final zero power impact on the end effector 6. Inversion dynamics uses measuring of the positions in its kinematic pairs created by the rotational joints with the drive 7 from which it derives velocities and accelerations and from these the needed forces in the drives are calculated so that the resulting force at the end effector is of zero value. Such a control compensates influence of gravitation and of dynamic forces on the arms 5, so that they do not affect the cooperative gripping head 3 from the measuring industrial robot 2. The final position, measured in its kinematic pairs created by the rotational joints with the drive 7, is then utilized for determination of the position of the center of the machining tool 4 gripped in the cooperative gripping head 3 and according this the power industrial robot is controlled.

In Fig. 2 there is a schematic depiction of an embodiment alternative to the Fig. 1 of the cooperative gripping head 3 where the measuring industrial robot 2 is connected to the cooperative gripping head 3 through a power sensor 19. Feedback from the values of the forces acting between the end effector 6 of the measuring industrial robot 2 and the cooperative gripping head 3 is used for control of the measuring robot 2 so that the robot does not affect the cooperative gripping head 3 with force. For example controlling may be performed with the aid of inverse dynamics. From the measured positions in the kinematic pairs created by rotational joints with the drive 7 and/or from their planned positions there are positions, velocities and accelerations determined as well as further calculated forces needed in the drives for the movement. To these forces such increments of the forces in drives are added to result in zero forces in the sensor of forces 19. The final position measured in its kinematic pairs created by the rotational joints with the drive 7 is then utilized for determination of the position of the center of the machining tool 4 gripped in the cooperative gripping head 3 and according to this the power industrial robot 1 is controlled. Possible sensing element of the force sensor 19 is a deforming element with tensiometers or a piezocrystal.

In Fig. 2 there is also a schematic depiction of an embodiment alternative to the Fig. 1 of the cooperative gripping head 3 where the measuring industrial robot 2 is connected to the cooperative gripping head 3 through a sensor of deviation of position and orientation 20 instead of through the power sensor 19. Feedback from the values of the deviation of a position and orientation between the end effector 6 of the measuring industrial robot 2 and the cooperative gripping head 3 is used to control the measuring robot 2 so that its end effector 6 follows precisely the cooperative gripping head 3 and by reason of this it does not impact the cooperative gripping head 3 with force. The measured deviations of a position and orientation in the sensor 20 are added to the actual position and orientation of the end effector 6 of the measuring robot 2 and are used as its required position and orientation e.g. in its position controlling. Subsequently the final position measured in its kinematic pairs created by the rotational joints with the drive 7 is then utilized for determination of the position of the center of the machining tool 4 gripped in the cooperative gripping head 3 and according to this the power industrial robot 1 is controlled. A possible sensor 20 of the deviation of a position and orientation is a pyramid with four laser beams impacting on a CCD or a PSD element or a hexapod or an octapod created with piezocolumns or with deformation columns with tensionmeters.

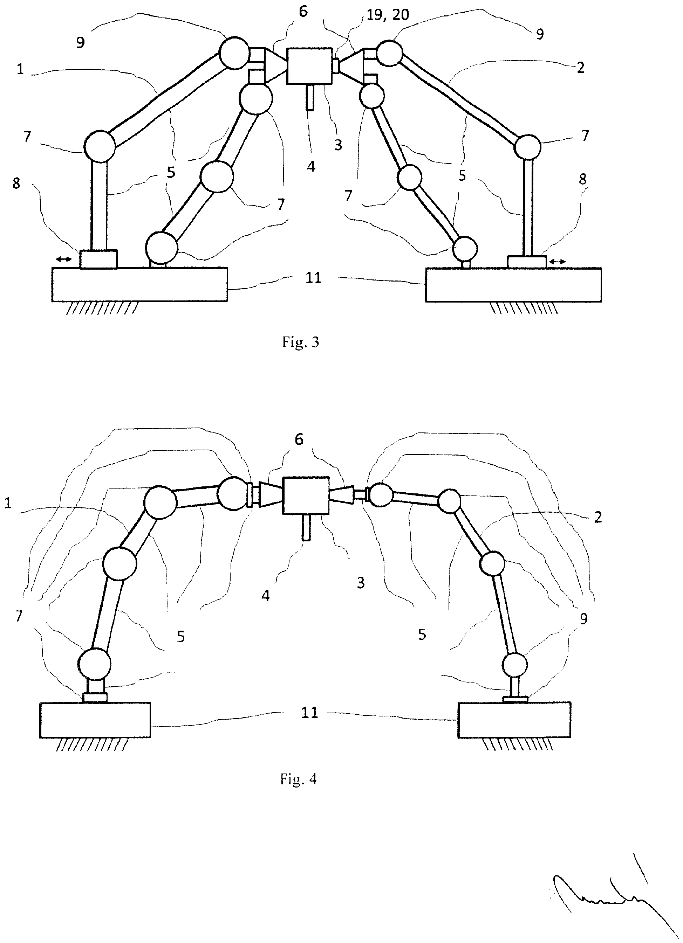

In Fig. 3 there is a schematic depiction of an embodiment alternative to the Fig. 2 of the cooperative gripping head 3 where the power industrial robot 1, as well as the measuring industrial robot 2, is with a parallel kinematic structure.
The power industrial robot 1 and the measuring industrial robot 2 have both the rotational joints with the drive 7 and the sliding guide with the drive 8, but they have rotational joints without the drive 9 as well.

Number of drives can advantageously be larger than number of the degrees of freedom of the cooperative gripping head 3. The measuring industrial robot 2 is connected to the cooperative gripping head 3 through the force sensor 19 and/or the sensor of deviation of a position and orientation 20. Control of the power industrial robot 1 and of the measuring industrial robot 2 and determination of the position of the center of the machining tool 4 gripped in the cooperative gripping head 3 is similar as the one in the Fig. 2.

In Fig. 4 there is a schematic depiction of another basic embodiment of the cooperative gripping head 3 that is carried by the industrial robot 1. The measuring industrial robot 2 is also connected to the cooperative gripping head 3 and it has a serial kinematic structure. The position of the center of the machining tool 4 gripped in the cooperative gripping head 3 is determined by the connected industrial robot 2 which has rotational joints without a drive. However, the rotational joints without a drive are equipped with sensors of rotation. Since, in this case, the measuring industrial robot 2 does not carry the drives it is significantly lighter and acts upon the cooperative gripping head 3 with negligible forces. That is why the position of the center of the machining tool 4 gripped in the cooperative gripping head 3 can be determined from measuring the rotations in its rotational joints without drives and, according to this, the power industrial robot 1 can be controlled.

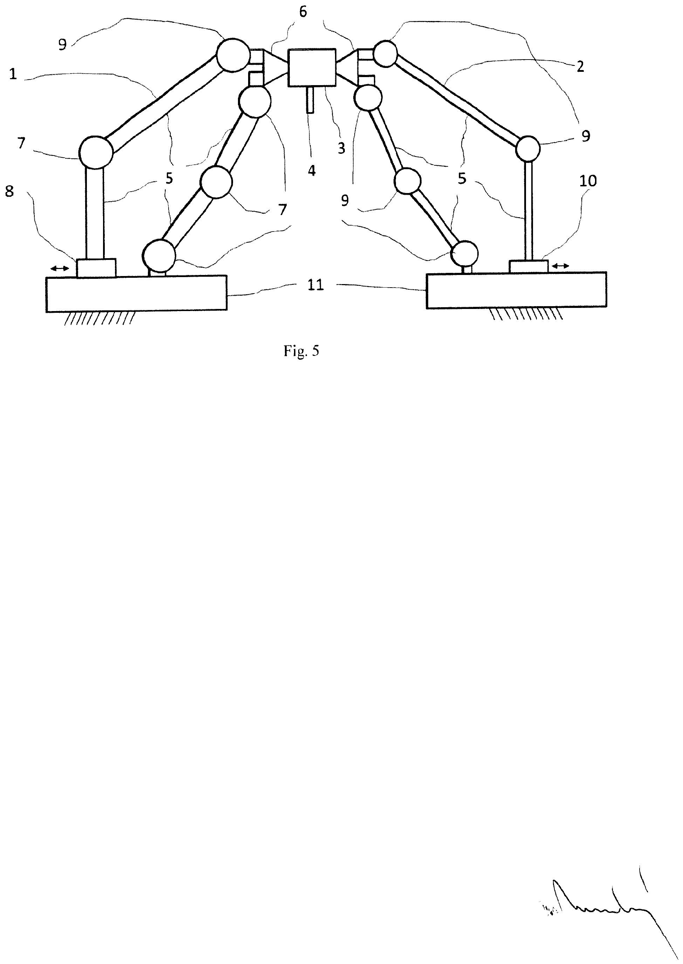

In Fig. 5 there is a schematic depiction of an embodiment alternative to the Fig. 4 of the cooperative gripping head 3 where the power industrial robot 1, as well as the measuring industrial robot 2, has a parallel kinematic structure. The position of the center of the machining tool 4 gripped in the cooperative gripping head 3 is determined by the connected industrial robot 2 which has rotational joints without a drive and sliding guides without a drive. However, these rotational joints without drives and sliding guides without drives are equipped with sensors of rotation and motion. Procedure of measuring and controlling is similar as shown in Fig. 4. Number of the drives of the power industrial robot 1 is advantageously larger than number of the degrees of freedom of the cooperative gripping head 3, which increases mechanical properties, e.g. rigidity. Number of the sensors in the rotational joints without drive and the sliding guides without drive of the measuring industrial robot 2 is advantageously larger than number of the degrees of freedom of the cooperative gripping head 3, which increases accuracy of measurement, enables auto-calibration and enables measuring and compensating of thermal deformation during machining.

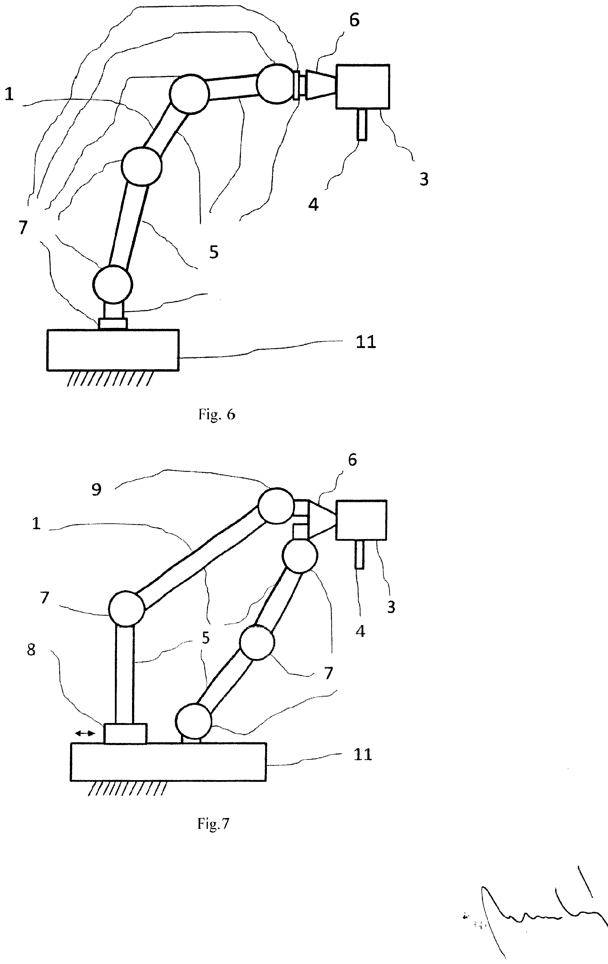

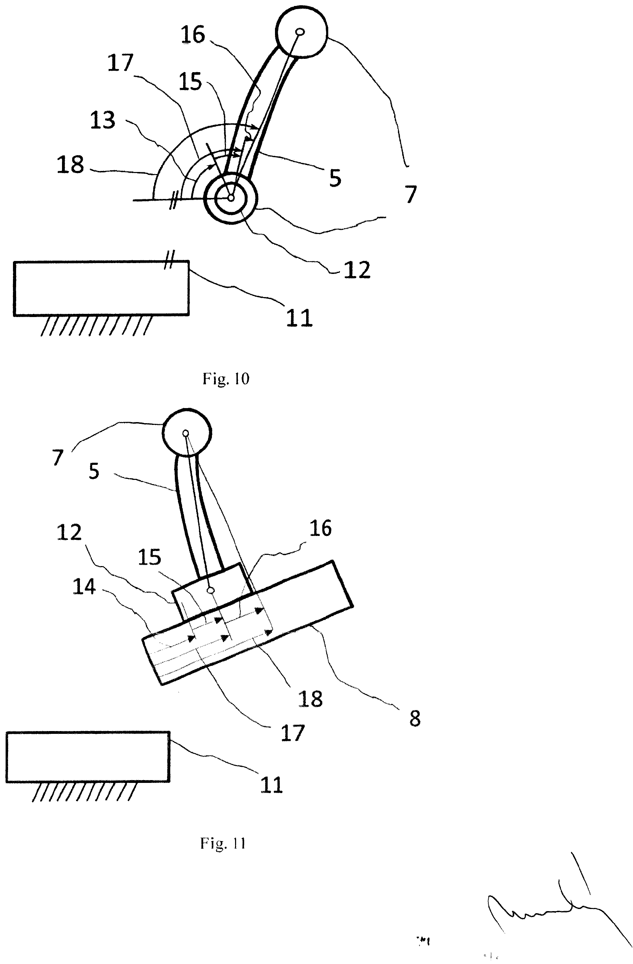

In Fig. 6 there is a schematic depiction of another basic embodiment of the cooperative gripping head 3 that is carried by one industrial robot 1 with a serial kinematic structure. The position of the center of the machining tool 4 gripped in the cooperative gripping head 3 is determined by measuring not only the rotation in the rotational joints with the drive 7 but as well as by measuring deformation in the drives and, eventually, deformation of the arms. The position of the center of the machining tool 4 gripped in the cooperative gripping head 3 is determined from the actual position of the arms 5 of the power industrial robot 1 according to the Fig. 10. Most of flexibility of the industrial robots is created by deformation in the rotational joints with the drive 7 and/or in the sliding guide with the drive 8. That is why the basic solution for determination of the position of the center of the machining tool 4 gripped in the cooperative gripping head 3 is determination of the overall position of the kinematic pair 17 in Fig. 10. This overall position of the kinematic pair 17 can be determined either by a special sensor in the rotational joint with the drive 7 and/or with a sum of rotations in the drive 13 and deformation in the drive 15 that are determined by appropriate sensors of rotation and deformation according to the Fig. 10. The second basic solution for determination of the position of the center of the machining tool 4 gripped in the cooperative gripping head 3, which is more precise, is determination of the overall position of the arm 18 in Fig. 10. This overall position of the arm 18 can be determined either by a special sensor and/or by a sum of the overall positions of the kinematic pair 17 and deformation of the arm 16 and/or with a sum of rotations in the drive 13 and deformation in the drive 15 and deformation of the arm 16 that are always determined by appropriate sensors of rotation and deformation according to the Fig. 10. Possible sensors for rotation measuring in the drive 13 are optical incremental admeasurements on the rotor of the drive for the rotational joint with the drive 7 and linear optical incremental admeasurements for motion in the drive 14 of the sliding guide with the drive 8. Possible sensors for deformation in the drive 15 for the rotational joint with the drive 7 are optical incremental admeasurements or tensiometers on the rotor of the rotational joint with the drive 7. Possible sensors for deformation in the drive 15 for the sliding guide with the drive 8 are linear optical incremental admeasurements or tensiometers on the sliding guide with the drive 8. A possible sensor for deformation of the arm 16 is a tensiometer or a laser beam impacting on a CCD or a PSD element or a camera scanning an image and/or lighting led diodes with at least four different points. Possible sensors for the overall position of the kinematic pair 17 of the rotational joint with the drive 7 are optical incremental admeasurements connected between the rotor of the drive 12 and beginning of the arm 5. Possible sensors for the overall position of the kinematic pair 17 of the sliding guide with the drive 8 are linear optical incremental admeasurements connected between the drive 12 and beginning of the arm 5. Possible sensors for the overall position of the arm 18 on the rotational joint with the drive 7 are optical incremental admeasurements derived from the position of a string stretched between the centers of the rotational joints with the drives 7. Possible sensor for the overall position of the arm 18 on the sliding guide with the drive 8 is a camera scanning the image and/or lighting led diodes with at least four different points.

In Fig. 7 there is a schematic depiction of another basic embodiment of the cooperative gripping head 3 that is carried by one industrial robot 1 with a parallel kinematic structure. The position of the center of the machining tool 4 is determined by measuring not only rotation in the rotational joints with drive 7 and/or in the sliding guides with drive 8 but also by measuring deformation in the drives and, eventually, deformation of the frame 11. Similar to the Fig. 6, the overall position of the arms 16 in the rotational joints with the drive 7 is determined according to the Fig. 10 and/or in the sliding guides with drives 8 according to the Fig. 11. When determining this, deformation of the arms 16 may mostly be neglected.

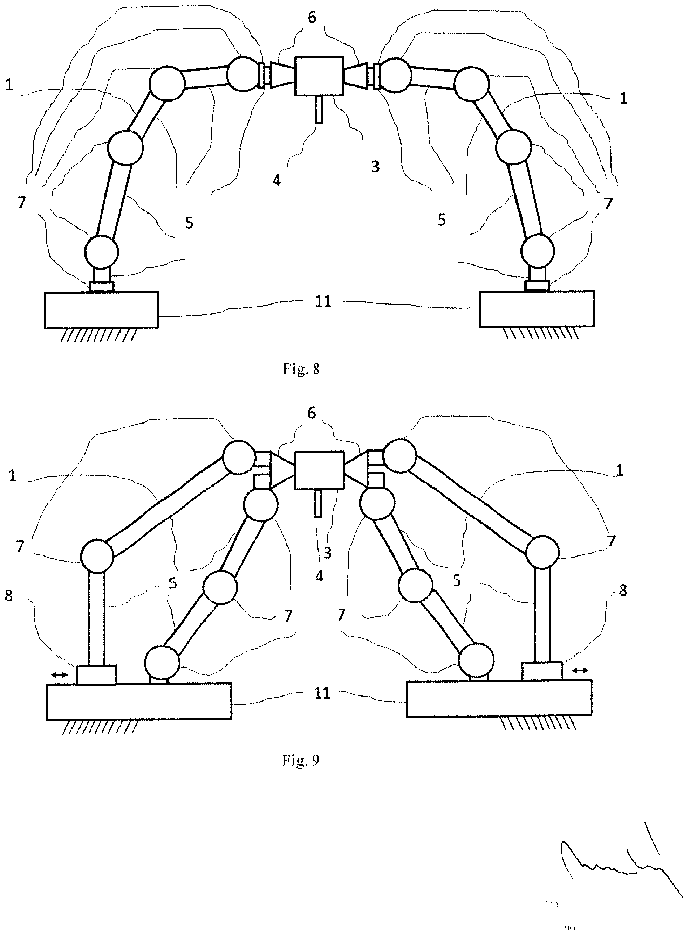

In Fig. 8 there is a schematic depiction of an alternative embodiment of the cooperative gripping head 3 to the Fig. 6. The cooperative gripping head 3 is carried with two power industrial robots 1 that have serial kinematic structures. The position of the center of the machining tool 4 is determined by measuring not only rotation in the rotational joints with drive 7 but also by measuring deformation in the drives and, eventually, deformation of the arms. The advantage of this embodiment is a sum of rigidity of both industrial robots 1. However, this embodiment enables also other solutions of control of the power industrial robots 1 that can take into account e.g. flexibility of the cooperative gripping head 3. One industrial robot 1 is controlled by positions and the second industrial robot 1 is controlled by power to compensate deformations of the cooperative gripping head 3.

In Fig. 9 there is a schematic depiction of another alternative embodiment of the cooperative gripping head 3 to the Fig. 8. The cooperative gripping head 3 is carried by two power industrial robots 1 that have parallel kinematic structures. The position of the center of the machining tool 4 is determined by measuring not only rotation in the rotational joints with drive 7 but also by measuring deformation in the drives and, eventually, deformation of the arms.

In Fig. 10 there is a schematic depiction of measuring rotation 13 of the drive 12 in the rotational joint with drive 7, deformation in the drive 15, deformation of the arm 16, the overall position of the kinematic pair 17 and the overall position of the arm 18. According to this Figure the overall position of the arm 18 can be determined with the help of various combinations mentioned above.

In Fig. 11 there is a schematic depiction of an alternative embodiment to the Fig. 10 for the sliding guide with the drive 8. The sliding guide with the drive 8 and the rotational joint with the drive 7 are connected by the arm 5. There are schematic depictions of measurement of motion 14 in the drive 12 of the sliding guide with the drive 8, deformation in the drive 15 for the case of motion, deformation of the arm 16 for the case of the sliding guide, the overall position of the kinematic pair 17 and the overall position of the arm 18 for the case of the sliding guide. According to this Figure the overall position of the arm 18 can be determined with the help of various combinations mentioned above.

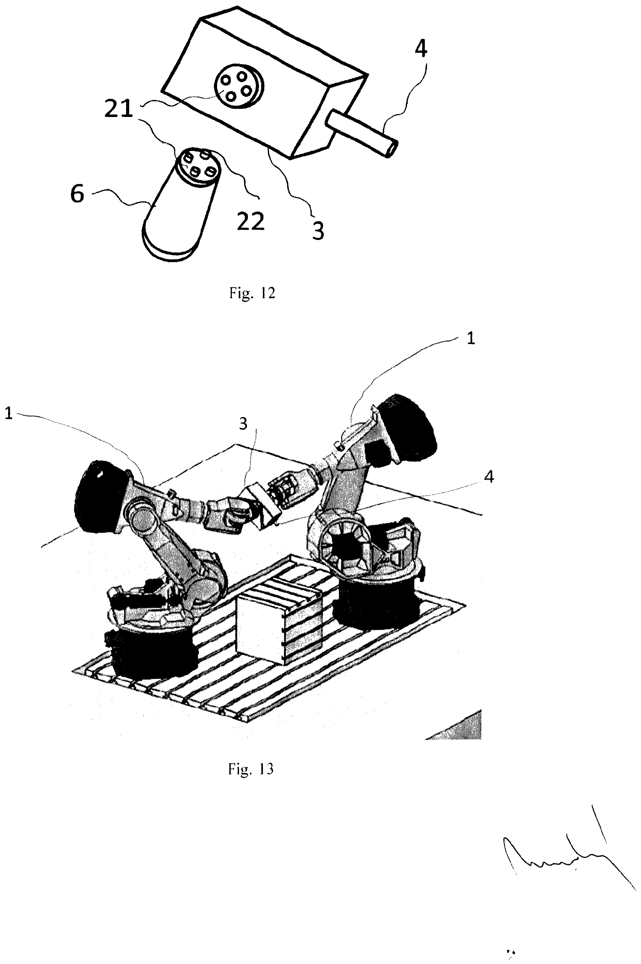

In Fig. 12 there is a schematic depiction of an example of an embodiment of the cooperative gripping head 3 with the machining tool 4 equipped with a connecting device 21 for connecting to the end effector 6 of the power industrial robot 1 and/or of the measuring industrial robot 2. The connecting device is remote-controlled by the control computer of the robots. Control can be e.g. pneumatic and can work with the help of opening and clamping of the mounted pins 22. The connecting device controlled like this enables to replace tools in the end effector of the power industrial robot 1, e.g. various gripping tools for mounting can be replaced by the cooperative gripping head 3 with the machining tool 4 and/or a welding head.

In Fig. 13 there is a schematic depiction of an example of an embodiment of the cooperative gripping head 3 with the machining tool 4 that is carried by two power industrial robots 1 with serial kinematic structures.

The cooperative gripping head 3 can be connected to more than two power industrial robots 1 and to more than one measuring industrial robot 2.

Besides the embodiments depicted in the Figures other combinations are possible. Instead of power or measuring industrial robots with serial kinematic structures an industrial robot with a parallel kinematic structure can be used and vice versa.

For determination of the position of the center of the machining tool gripped in the cooperative gripping head individual measurements for determination of the deviation of the position of the center of the machining tool from the position required are carried out as first. These measurements always represent a certain set of measurements of a power and/or a measuring industrial robot. These sets of measurements include
- measurement of positions in the kinematic pairs created by rotational joints or sliding guides on the measuring industrial robot with no power impact on the cooperative gripping head and/or
- measurement of positions in the kinematic pairs together with measurement of deformations in the drives of the kinematics pairs of the power industrial robot and/or
- measurement of an overall position in the kinematic pairs including deformations in the drives of the kinematics pairs of the power industrial robot and/or
- measurement of positions in the kinematic pairs together with measurement of deformations in the drives of the kinematics pairs of the power industrial robot and deformations of the arms of the power industrial robot and/or
- measurement of an overall position in the kinematic pairs together with deformations in the drives of the kinematics pairs of the power industrial robot and deformations of the arms of the power industrial robot and/or
- measurement of an overall position of the arms of the power industrial robot including a position and deformation in the drives of its kinematic pairs and deformation of its arms.

If a deviation of the position of the center of the machining tool from the position required is found out, drives of the power industrial robot are controlled with feedback to achieve zero deviations of the position of the center of the machining tool of the cooperative gripping head.

During individual concrete methods of determining the position of the center of the machining tool gripped in the cooperative gripping head at least one of the measuring industrial robots is controlled by impacting on the cooperative gripping head with zero forces. From the positions in its kinematic pairs the position of the center of the machining tool of the cooperative gripping head is determined and according to the deviation of the position of the center from the position required the drives of the power industrial robot are controlled with feedback to reach zero deviations of the position of the center of the machining tool of the cooperative gripping head.

Within another individual concrete method of determining the position of the center of the machining tool gripped in the cooperative gripping head at least one of the measuring industrial robots including no drives is driven by the cooperative gripping head through a connecting device with no force impacting upon the cooperative gripping head. From the positions in its kinematic pairs the position of the center of the machining tool of the cooperative gripping head is determined and, further, according to the deviation of the position of the center from the position required, the drives of the power industrial robot are controlled with feedback to reach zero deviations of the position of the center of the machining tool of the cooperative gripping head. Within another concrete method of determining the position of the center of the machining tool gripped in the cooperative gripping head in kinematic pairs of at least one of the power industrial robots a position in the kinematic pairs and deformation in the drives of the kinematic pairs are measured and from the positions and deformations the position of the center of the machining tool of the cooperative gripping head is determined and according the deviation of the position of the center from the position required the drives of the power industrial robot are controlled with feedback to reach zero deviations of the position of the center of the machining tool of the cooperative gripping head.

Within another concrete method of determining the position of the center of the machining tool gripped in the cooperative gripping head in kinematic pairs of at least one of the power industrial robots a position in its kinematic pairs, deformation in the drives of the kinematic pairs and deformation of its arms are measured and from these positions and deformations the position of the center of the machining tool of the cooperative gripping head is determined and according to the deviation of the position of the center from the position required the drives of the power industrial robot are controlled with feedback to reach zero deviations of the position of the center of the machining tool of the cooperative gripping head.

Within another concrete method of determining the position of the center of the machining tool gripped in the cooperative gripping head in kinematic pairs of at least one of the power industrial robots an overall position in the kinematic pairs including deformation in the drives of the kinematic pairs are measured and from the positions and deformations the position of the center of the machining tool of the cooperative gripping head is determined and according to the deviation of the position of the center from the position required the drives of the power industrial robot are controlled with feedback to reach zero deviations of the position of the center of the machining tool of the cooperative gripping head.

Within another concrete method of determining the position of the center of the machining tool gripped in the cooperative gripping head in kinematic pairs of at least one of the power industrial robots an overall position in the kinematic pairs including deformation in the drives of the kinematic pairs and deformations of the arms are measured and from the positions and deformations the position of the center of the machining tool of the cooperative gripping head is determined and according to the deviation of the position of the center from the position required the drives of the power industrial robot are controlled with feedback to reach zero deviations of the position of the center of the machining tool of the cooperative gripping head.

Within another concrete method of determining the position of the center of the machining tool gripped in the cooperative gripping head at least on one of the power industrial robots an overall position of the arms of the power industrial robot including positions and deformations in the drives of the kinematic pairs and deformations of the arms are measured and from the positions and deformations the position of the center of the machining tool of the cooperative gripping head is determined and according to the deviation of the position of the center from the position required the drives of the power industrial robot are controlled with feedback to reach zero deviations of the position of the center of the machining tool of the cooperative gripping head.

Determining the position of the center of the machining tool and control of the movement of the power or measuring industrial robots performed by a computer.

## Claims

1. A method of determination of a position of a center of a machining tool gripped in a cooperative gripping head connected removably to at least two power industrial robots with respective end effectors and connecting devices wherein the position of the center of the machining tool is determined from the measurements of positions of the kinematic pairs formed by rotational joints or sliding guides on at least one power industrial robot connected to the cooperating gripping head and from the measurement of deformations in the drives of these particular kinematic pairs and from the measurements or without the measurements of the deformation of the arms of the power industrial robots and if a deviation of the position of the center of the machining tool from the position required is found out, drives of the power industrial robots are controlled with feedback to achieve zero deviations of the position of the center of the machining tool of the cooperative gripping head.

2. A method of determining the position of the center of the machining tool gripped in the cooperative gripping according to the claim 1 wherein at least one measuring industrial robot is connected to the cooperative gripping head and is controlled by impacting upon the cooperative gripping head with zero forces and from the positions in its kinematic pairs formed by rotational joints or sliding guides the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

3. A method of determining the position of the center of the machining tool gripped in the cooperative gripping head according one of the abovementioned claims wherein at least one measuring industrial robot including no drives is connected to the cooperative gripping head and is driven by the cooperative gripping head through a connecting device with no force impacting upon the cooperative gripping head and from the positions in its kinematic pairs the position of the center of the machining tool of the cooperative gripping head is determined and, further, according to the deviation of the position of the center from the position required the drives of the power industrial robots are controlled with feedback to reach zero deviations of the position of the center of the machining tool of the cooperative gripping head.

4. A method of determining the position of the center of the machining tool gripped in the cooperative gripping head according to one of the abovementioned claims wherein in kinematic pairs of at least one of the power industrial robots a position in the kinematic pairs and deformation in the drives of the kinematic pairs are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

5. A method of determining the position of the center of the machining tool gripped in the cooperative gripping head according to one of the abovementioned claims wherein in kinematic pairs of at least one of the power industrial robots a position in the kinematic pairs, deformation in the drives of the kinematic pairs and deformation of the arms are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

6. A method of determining the position of the center of the machining tool gripped in the cooperative gripping head according to one of the abovementioned claims wherein in kinematic pairs of at least one of the power industrial robots an overall position in the kinematic pairs including deformation in the drives of the kinematic pairs are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

7. A method of determining the position of the center of the machining tool gripped in the cooperative gripping head according to one of the abovementioned claims wherein in kinematic pairs of at least one of the power industrial robots an overall position in the kinematic pairs including deformation in the drives of the kinematic pairs and deformation of the arms are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

8. A method of determining the position of the center of the machining tool gripped in the cooperative gripping head according to one of the abovementioned claims wherein on at least one of the power industrial robots an overall position of the arms of the power industrial robot including positions and deformations in the drives of the kinematic pairs and deformations of the arms are measured and from the positions and deformations the position of the center of the machining tool of the cooperative gripping head is determined and according to the deviation of the position of the center from the position required the drives of the power industrial robots are controlled with feedback to reach zero deviations of the position of the center of the machining tool of the cooperative gripping head.

9. Arrangement for determining the position of the center of the machining tool mounted in the cooperating gripping head according to the method of claim 1 wherein the arrangement comprises the cooperative gripping head and at leasttwo power industrial robots, wherein the cooperative gripping head (3) carrying the machining tool (4) is connected removably to the end effectors (6) of the at least two power industrial robots (1), wherein at least one power industrial robot (1) is equipped with sensors for determining the position of the center of the machining tool.

10. Arrangement for determining the position of the center of the machining tool, according to the claim 9, wherein the cooperative gripping head (3) is in connection with another power industrial robot (1) or with a measuring industrial robot (2).

11. Arrangement for determining the position of the center of the machining tool, according to claim 10, wherein the measuring industrial robot (2) is equipped with drives in the rotational joints (9) or in the sliding guides (10)

12. Arrangement for determining the position of the center of the machining tool, according to one of the abovementioned claims 9-11, wherein the connecting device of the cooperative gripping head is equipped with force sensors and/or with sensors of deviation of a position and orientation to ensure zero force impact.

13. Arrangement for determining the position of the center of the machining tool, according to one of the abovementioned claims 9-12, wherein at least one of the power industrial robots (1) is equipped with sensors of positions in the rotational joints (9) or in the sliding guides (10) and with sensors of deformations in the drives of the kinematic pairs.

14. Arrangement for determining the position of the center of the machining tool, according to one of the abovementioned claims 9-13, wherein at least one of the power industrial robots (1) is equipped with sensors of positions in the rotational joints (9) or in the sliding guides (10) and with sensors of deformations in the drives of the kinematic pairs and with sensors of deformations of the arms (5).

15. Arrangement for determining the position of the center of the machining tool, according to one of the abovementioned claims 9-14, wherein the power industrial robot (1) and/or the measuring industrial robot (2) has a parallel kinematic structure.

## Patentansprüche

1. Methode zur Bestimmung der Mittestellung des Bearbeitungwerkzeuges angebrachtes im zusammenwirkenden Greifkopf annehmbar verbundenem mit mindestens zwei Kraft-Industrierobotern mit relevanten Endefektoren und Anschlußanlagen, wenn die Mittestellung des Bearbeitungswerkzeuges aus den Messungen der Stellungen der individuellen kinematischen Paare gebildeten von rotierenden Gelenken oder Gleitführungen auf mindestens einem KraftIndustrieroboter verbundenem mit dem zusammenwirkenden Greifkopf bestimmt wird, und aus den Verformungsmessungen in Antrieben der individuellen kinematischen Paare und aus den Messungen oder ohne Messungen der Verformungen der Armen dieser Kraft Industrieroboter und aus der festgestellten Abweichung dieser Mittestellung des Bearbeitungswerkzeuges von der SollStellung, die Antriebe der Kraft-Industrieroboter sind Feedback gesteuert um die Nullabweichungen der Mittestellung des Bearbeitungswerkzeuges der zusammenwirkenden Greifkopf zu erreichen.

2. Methode zur Bestimmung der Mittestellung des Bearbeitungwerkzeuges angebrachtes im zusammenwirkenden Greifkopf gemäß dem Anspruch 1, wenn mindestens ein Messindustrieroboter zu der zusammenwirkenden Greifkopf angeschlossen ist und so gesteuert ist, daß er auf den zusammenwirkenden Greifkopf mit den Nullkraeften wirkt und aus der Stellungen in seinen kinematischen Paaren, die Mittestellung des Bearbeitungswerkzeugs des zusammenwirkenden Greifkopf bestimmt ist und gemäß der Abweichung der Stellung dieses Mittelpunkt von der Sollstellung die Antriebe der KraftIndustrieroboter Feedback gesteuert sind um die Nullabweichungen der Mittestellung des Bearbeitungswerkzeuges der zusammenwirkenden Greifkopf zu erreichen.

3. Methode zur Bestimmung der Mittestellung des Bearbeitungwerkzeuges angebrachtes im zusammenwirkenden Greifkopf gemäß einem der vorhergehenden Ansprüche , wenn mindestens ein Messindustrieroboter, ohne Antrieb, zu dem zusammenwirkenden Greifkopf angeschlossen ist und mit dem zusammenwirkenden Greifkopf durch die Anschlußanlage, ohne Kraftbewirkung auf den zusammenwirkenden Greifkopf geführt wird, und aus der Stellungen in seinen kinematischen Paaren, die Mittestellung des Bearbeitungswerkzeugs des zusammenwirkenden Greifkopf bestimmt ist und danach gemäß der Abweichung der Stellung dieses Mittelpunkt von der Sollstellung die Antriebe der Kraftindustrieroboter Feedback gesteuert sind um die Nullabweichungen der Mittestellung des Bearbeitungswerkzeuges der zusammenwirkenden Greifkopf zu erreichen.

4. Methode zur Bestimmung der Mittestellung des Bearbeitungwerkzeuges angebrachtes im zusammenwirkenden Greifkopf gemäß einem der vorhergehenden Ansprüche, wenn in kinematischen Paaren des mindestens einen Kraftindustrieroboter die Stellung in seinen kinematischen Paaren gemessen wird, und Verformung in seinen Antrieben der kinematischen Paaren, und aus dieser Stellungen und Verformungen die Mittestellung des Bearbeitungswerkzeuges des zusammenwirkenden Greifkopf bestimmt wird und gemäß der Abweichung der Stellung dieses Mittelpunkt von der Sollstellung die Antriebe der Kraftindustrieroboter Feedback gesteuert sind um die Nullabweichungen der Mittestellung des Bearbeitungswerkzeuges der zusammenwirkenden Greifkopf zu erreichen.

5. Methode zur Bestimmung der Mittestellung des Bearbeitungwerkzeuges angebrachtes im zusammenwirkenden Greifkopf gemäß einem der vorhergehenden Ansprüche, wenn in kinematischen Paaren des mindestens einen Kraftindustrieroboter, die Stellung in seinen kinematischen Paaren, die Verformung in Antrieben der kinematischen Paare, die Verformung seiner Armen gemessen wird, und aus dieser Stellungen und Verformungen die Mittestellung des Bearbeitungswerkzeuges des zusammenwirkenden Greifkopf bestimmt wird und gemäß der Abweichung der Stellung dieses Mittelpunkt von der Sollstellung die Antriebe der Kraftindustrieroboter Feedback gesteuert sind, um die Nullabweichungen der Mittestellung des Bearbeitungswerkzeuges der zusammenwirkenden Greifkopf zu erreichen.

6. Methode zur Bestimmung der Mittestellung des Bearbeitungwerkzeuges angebrachtes im zusammenwirkenden Greifkopf gemäß einem der vorhergehenden Ansprüche, wenn in kinematischen Paaren des mindestens einen Kraftindustrieroboter die gesamte Stellung in seinen kinematischen Paaren einschließlich der Verformung in Antrieben der kinematischen Paare gemessen wird, und aus dieser Stellungen und Verformungen die Mittestellung des Bearbeitungswerkzeuges des zusammenwirkenden Greifkopf bestimmt wird und gemäß der Abweichung der Stellung dieses Mittelpunkt von der Sollstellung die Antriebe der Kraftindustrieroboter Feedback gesteuert sind um die Nullabweichungen der Mittestellung des Bearbeitungswerkzeuges der zusammenwirkenden Greifkopf zu erreichen.

7. Methode zur Bestimmung der Mittestellung des Bearbeitungwerkzeuges angebrachtes im zusammenwirkenden Greifkopf gemäß einem der vorhergehenden Ansprüche, wenn in kinematischen Paaren des mindestens einen Kraftindustrieroboter die gesamte Stellung in seinen kinematischen Paaren einschließlich der Verformung in Antrieben der kinematischen Paaren und Verformung seiner Armen gemessen wird, und aus dieser Stellungen und Verformungen die Mittestellung des Bearbeitungswerkzeuges des zusammenwirkenden Greifkopf bestimmt wird und gemäß der Abweichung der Stellung dieses Mittelpunkt von der Sollstellung die Antriebe der Kraftindustrieroboter Feedback gesteuert sind um die Nullabweichungen der Mittestellung des Bearbeitungswerkzeuges der zusammenwirkenden Greifkopf zu erreichen.

8. Methode zur Bestimmung der Mittestellung des Bearbeitungwerkzeuges angebrachtes im zusammenwirkenden Greifkopf gemäß einem der vorhergehenden Ansprüche, wenn bei mindestens einem Kraftindustrieroboter die gesamte Stellung der Armen des Kraftindustrieroboter einschließlich der Stellung und Verformung in den Antrieben seiner kinematischen Paare und Verformungen seiner Armen gemessen wird, und aus dieser Stellungen und Verformungen die Mittestellung des Bearbeitungswerkzeuges des zusammenwirkenden Greifkopf bestimmt wird und gemäß der Abweichung der Stellung dieses Mittelpunkt von der Sollstellung die Antriebe der Kraftindustrieroboter Feedback gesteuert sind um die Nullabweichungen der Mittestellung des Bearbeitungswerkzeuges der zusammenwirkenden Greifkopf zu erreichen.

9. Anordnung zur Bestimmung der Mittestellung des Bearbeitungwerkzeuges angebrachtes im zusammenwirkenden Greifkopf gemäß der Methode im Anspruch 1, wenn diese Anordnung beinhaltet einen zusammenwirkenden Greifkopf und mindestens zwei Kraftindustrieroboter, wo der zusammenwirkende Greifkopf (3) mit dem Bearbeitungswerkzeug (4) annehmbar mit dem Endefektor (6) von den mindestens zwei Kraftindustrierobotern (1) verbunden ist, wobei mindestens ein Kraftindustrieroboter (1) mit Sensoren für die Ermittlung der Mittestellung des Bearbeitungswerkzeuges ausgerüstet wird.

10. Anordnung zur Bestimmung der Mittestellung des Bearbeitungwerkzeuges nach dem Anspruch 9, wo der zusammenwirkende Greifkopf (3) mit anderem Kraftindustrieroboter (1) oder dem Messindustrieroboter (2) im Kontakt ist.

11. Anordnung zur Bestimmung der Mittestellung des Bearbeitungwerkzeuges nach dem Anspruch 10, wo der Messindustrieroboter (2) mit den Antrieben in rotierenden Gelenken (9) oder Gleitführungen (10) ausgerüstet ist.

12. Anordnung zur Bestimmung der Mittestellung des Bearbeitungwerkzeuges nach den Ansprüchen 9-11, wo die Anschlußanlage des zusammenwirkenden Greifkopf mit den Kraftsensoren und/oder Sensoren der Abweichung der Stellung oder Orientierung ausgerüstet ist, um die null Krafteinwirkung sicherzustellen.

13. Anordnung zur Bestimmung der Mittestellung des Bearbeitungwerkzeuges nach den Ansprüchen 9-12, wo mindestens einer der Kraft-Industrieroboter (1) mit den Stellungssensoren in den rotierenden Gelenken (9) oder Gleitführungen (10) und mit den Verformungssensoren in Antrieben der kinematischen Paare ausgerüstet wird.

14. Anordnung zur Bestimmung der Mittestellung des Bearbeitungwerkzeuges nach den Ansprüchen 9-13, wo mindestens einer der Kraftindustrieroboter (1) mit den Stellungssensoren in den rotierenden Gelenken (9) oder Gleitführungen (10) und mit den Verformungssensoren in Antrieben der kinematischen Paaren und Verformungssensoren der Arme (5) ausgerüstet wird.

15. Anordnung zur Bestimmung der Mittestellung des Bearbeitungwerkzeuges nach den Ansprüchen 9-14, wo der Kraftindustrieroboter (1) und/oder Messindustrieroboter (2) eine parallele kinematische Struktur hat.

## Revendications

1. Le procédé pour déterminer la position du centre d'une machine-outil montée dans une tête de saisie coopérant, reliée de manière amovible à au moins deux robots industriels de puissance avec des effecteurs d'extrémité respectifs et des dispositifs de connexion, déterminant la position du centre de l'outil d'usinage à partir des positions de mesure de paires cinématiques individuelles formées par des articulations rotatives ou des guides coulissants sur au moins un robot industriel de puissance connecté à une tête de saisie coopérante et à partir de mesures des déformations dans les entraînements des paires cinématiques individuelles et à partir de mesure ou sans mesurer les déformations des bras de ces robots industriels de puissance et à partir de l'écart détecté de cette position du centre de l'outil d'usinage par rapport à la position désirée, les entraînements des robots industriels de puissance sont commandés par retro-action pour obtenir des écarts nuls de la position du centre de l'outil d'usinage de la tête de saisie coopérante.

2. Le procédé de détermination de la position du centre de l'outil d'usinage monté dans la tête de saisie coopérante selon la revendication 1, dans lequel au moins un robot industriel de mesure est connecté à la tête de saisie coopérante et il est commandé pour appliquer des forces nulles à la tête de saisie coopérante, et à partir des positions dans ses paires cinématiques, la position du centre de l'outil d'usinage de la tête de saisie coopérante est déterminée et en fonction de l'écart de la position. de ce centre par rapport à la position souhaitée, les entraînements des robots industriels de puissance sont commandés par retroaction pour atteindre des écarts nuls de la position du centre de l'outil d'usinage de la tête de saisie coopérante.

3. Le procédé pour déterminer la position du centre d'un outil d'usinage monté dans une tête de saisie coopérante selon l'une quelconque des revendications précédentes, dans lequel au moins un robot industriel de mesure sans entraînements est connecté à la tête de saisie coopérante et est guidé par la tête de saisie coopérante à travers le dispositif de connexion, sans exercer de forces sur la tête de saisie coopérante, et à partir des positions dans ses paires cinématiques, la position du centre de l'outil d'usinage de la tête de saisie coopérante est déterminée, et ensuite, en fonction de l'écart de la position de ce centre par rapport à la position souhaitée, les entraînements des robots industriels de puissance sont commandés par retroaction pour obtenir des écarts nuls de la position du centre de l'outil d'usinage de la tête de saisie coopérante.

4. Le procédé pour déterminer la position du centre d'un outil d'usinage monté dans une tête de saisie coopérante selon l'une quelconque des revendications précédentes, dans lequel la position dans ses paires cinématiques est mesurée en paires cinématiques d'au moins un robot industriel de puissance et la déformation dans ses entraînements de paires cinématiques et à partir de ces positions et déformations, la position du centre de l'outil d'usinage de la tête de saisie coopérante de l'outil d'usinage est déterminée, et en fonction de l'écart de ce centre par rapport à la position désirée, les entraînements des robots industriels de puissance sont commandés par retroaction pour obtenir des écarts nuls de la position du centre de l'outil d'usinage de la tête de saisie coopérante.

5. Le procédé pour déterminer la position du centre d'un outil d'usinage monté dans une tête de saisie coopérante selon l'une quelconque des revendications précédentes, dans lequel la position dans ses paires cinématiques, la déformation de ses bras et la déformation dans ses entraînements des paires cinématiques sont mesurées en paires cinématiques d'au moins un robot industriel de puissance, et à partir de ces positions et déformations, la position du centre de l'outil d'usinage de la tête de saisie coopérante est déterminée, et à partir de l'écart de la position de ce centre par rapport à la position souhaitée, les entraînements des robots industriels de puissance sont commandés par retroaction pour obtenir des écarts nuls de la position du centre de l'outil d'usinage de la tête de saisie coopérante.

6. Le procédé pour déterminer la position du centre d'un outil d'usinage monté dans une tête de saisie coopérante selon l'une des revendications précédentes, dans lequel dans les paires cinématiques d'au moins un robot industriel de puissance, la position totale dans ses paires cinématiques est mesurée, y compris la déformation dans ses entraînements des paires cinématiques et à partir de ces positions et déformations, la position du centre de l'outil d'usinage de la tête de saisie coopérante est déterminée, et en fonction de l'écart de la position de ce centre par rapport à la position souhaitée, les entraînements des robots industriels de puissance sont commandés par retroaction pour obtenir des écarts nuls de la position du centre de l'outil d'usinage de la tête de saisie coopérante.

7. Le procédé pour déterminer la position du centre d'un outil d'usinage monté dans une tête de saisie coopérante selon l'une des revendication précédentes, dans lequel dans les paires cinématiques d'au moins un robot industriel de puissance, la position totale dans ses paires cinématiques est mesurée y compris la déformation dans. ses entraînements de paires cinématiques et la déformation des bras et à partir de ces positions et déformations, la position du centre de l'outil d'usinage de la tête de saisie coopérante est déterminée, et en fonction de l'écart de la position de ce centre par rapport à la position souhaitée, les entraînements des robots industriels de puissance sont commandés par retroaction pour obtenir des écarts nuls de la position du centre de l'outil d'usinage de la tête de saisie coopérante.

8. Le procédé pour déterminer la position du centre d'un outil d'usinage monté dans une tête de saisie coopérante selon l'une quelconque des revendications précédentes, dans lequel pour au moins un robot industriel de puissance mesure, la position globale des bras de robot industriel de puissance y compris la position et la déformation dans des entraînements de ses paires cinématiques et des déformations de ses bras et à partir de ces positions et déformations, la position du centre de l'outil d'usinage de la tête de saisie coopérante est déterminée, et en fonction de l'écart de la position de ce centre par rapport à la position souhaitée, les entraînements des robots industriels de puissance sont commandés par retroaction pour obtenir des écarts nuls de la position du centre de l'outil d'usinage de la tête de saisie coopérante.

9. La disposition pour déterminer la position du centre d'un outil d'usinage monté dans une tête de saisie coopérante selon la manière de la revendication 1, dans lequel cette disposition comprend une tête de saisie coopérante et au moins deux robots industriels de puissance, la tête de saisie coopérante (3) portant l'outil d'usinage (4) est connectée de manière amovible à l'effecteur terminal (6) d'au moins deux robots industriels de puissance (1), au moins un robot industriel de puissance (1) étant pourvu de capteurs pour déterminer la position du centre de l'outil d'usinage.

10. La disposition pour déterminer la position du centre d'un outil d'usinage selon la revendication 9, dans lequel la tête de saisie coopérante (3) est en contact avec un autre robot industriel de puissance (1) ou avec un robot industriel de mesure (2).

11. La disposition pour déterminer la position du centre d'un outil d'usinage selon la revendication 10, dans lequel le robot industriel de mesure (2) est pourvu d'entraînements dans des articulations rotatives (9) ou dans des guides coulissants (10).

12. La disposition pour déterminer la position du centre de l'outil d'usinage selon les revendications 9 à 11, dans lequel le dispositif de connexion de la tête de saisie coopérante est pourvu de capteurs de puissance et/ ou de capteurs d'écart de la position et de l'orientation pour assurer une action de force nulle.

13. La disposition pour déterminer la position du centre d'un outil d'usinage selon les revendications 9 à 12, dans lequel au moins un des robots industriels de puissance (1) est pourvu de capteurs de positions dans des articulations rotatives (9) ou dans des guides coulissants (10) et de capteurs de déformations dans les entraînements des paires cinématiques.

14. La disposition pour déterminer la position du centre d'un outil d'usinage selon les revendications 9 à 13, dans lequel au moins un des robots industriels de puissance (1) est pourvu de capteurs de position dans des articulations rotatives (9) ou dans des guides coulissants (10) et de capteurs de déformation dans les entraînements des paires cinématiques et de capteurs de déformation des bras (5).

15. La disposition pour déterminer la position du centre d'un outil d'usinage selon les revendications 9 à 14, dans lequel un robot industriel de puissance (1) et /ou un robot industriel de mesure (2) a une structure cinématique parallèle.
